# EUROPEAN PATENT SPECIFICATION

(11) **EP 1 845 745 B1**
(45) Date of publication and mention of the grant of the patent: **22.02.2012**
(21) Application number: 06290907.2
(22) Date of filing: 02.06.2006
(51) Int. Cl.: H04W 36/00

(54) **A cell discovery method and related equipment**
Verfahren zur Zellentdeckung und entsprechende Vorrichtung
Procédé de découverte de cellule et équipement associé

(30) Priority: 12.04.2006 US 791374
(43) Date of publication of application: 17.10.2007
(73) Proprietor: Alcatel Lucent, 75007 Paris (FR)
(72) Inventor: Ratovelomanana, Frédéric, 75018 Paris (FR); Mihailescu, Claudiu, 78000 Versailles (FR); Taton, Loïc, 92700 Colombes (FR)
(74) Representative: Ameline, Jean-Paul B.C.

(56) References cited:
- EP-A- 0 986 279
- US-A1- 2002 004 371
- US-A1- 2005 144 322
- US-B1- 6 845 238
- OLOFSSON H ET AL: "A concept for dynamic neighbor cell list planning in a cellular system" PERSONAL, INDOOR AND MOBILE RADIO COMMUNICATIONS, 1996. PIMRC'96., SEVENTH IEEE INTERNATIONAL SYMPOSIUM ON TAIPEI, TAIWAN 15-18 OCT. 1996, NEW YORK, NY, USA,IEEE, US, vol. 1, 15 October 1996 (1996-10-15), pages 138-142, XP010209051 ISBN: 0-7803-3692-5
- "Universal Mobile Telecommunications System (UMTS); User Equipment (UE) conformance specification; Part 1: Protocol conformance specification (3GPP TS 34.123-1 version 4.1.0 Release 4); ETSI TS 134 123-1", ETSI STANDARDS, LIS, SOPHIA ANTIPOLIS CEDEX, FRANCE, vol. 3-T1, no. V4.1.0, 1 December 2001 (2001-12-01), XP014010349, ISSN: 0000-0001

## Description

The present invention relates to a method for discovering neighbouring cells in a radio cellular network. More specifically the invention relates to a dynamic terminal equipment based cell discovery.

A radio cellular network generally comprises a plurality of cells. So as to ensure a continuity of service, it is necessary to know the neighbouring cells relating to each cell in the network.

A mobile terminal involved in a communication with a given cell in the network can thus make measurements relating to neighbouring cells of said given cell and possibly continue to communicate with one of the neighbouring cells, when some conditions: are fulfilled (the signal level or quality of the downlink or the uplink has dropped below a threshold, a better signal level has been identified in connection with a neighbouring cell, etc.). This communication switch procedure is known as a handover.

The same applies in idle mode, where a mobile terminal must be provided with information about the neighbouring cells of the cell it has selected before, in order to be able to re-select one of these neighbouring cells under certain circumstances.

US 6,845,238 rotates to a method for performing inter-frequency handovers. The problem solved by US 6,845,238 is how to allocate appropriate cells for the active set on the new frequency as quickly as possibly.

US patent application publication N° 2002/0004371 relates to a method of signaling compressed mode parameters to a mobile terminal from a mobile radiocommunications network, wherein the compressed mode parameters are signaled by the network to the mobile terminal together with control parameters for radio measurements to be performed by the mobile terminal.

US patent application publication N° 2005/0144322 describes a home gateway network comprising a plurality of home gateway apparatus and connected to a domain name system (DNS) server, the server having a ENUM (telephone Number Mapping) function.

The 3GPP technical specification TS 34.1.23-1, entitled "User Equipment (UE) conformance specification; Part 1: Protocol conformance specification (Release 4)", v4.1.0, published in December 2001, provides a detailed description in its Section 8.4 on the measurement procedures and massages that are to be used by a user equipment communicating with a UMTS terrestrial access network (UTRAN).

When the neighbouring cells are not properly defined, this may lead to non optimal radio connections or in some cases to a drop of the radio connections, which may be very frustrating, especially for a user in communication.

The traditional way of defining neighbouring cells is through a provisioning made by the operator. Indeed, the operator generally knows the design of its network and can thus define a list of neighbouring cells for each cell in the network, the maximum size of the list being imposed by the system.

Such provisioning is a rather laborious and costly task. Moreover, it must be done each time the design of the network is significantly changed, in order to take into account newly deployed cells for example.

This problem is even greater in a radio cellular network comprising multiply cell layers, such as a macro layer including macro cells with a coverage up to 30 kilometers, a micro layer including micro cells with a coverage up to a couple of hundred meters and/or a pico layer including pico cells with an indoor coverage.

A further problem may occur especially in the context of so called home gateway (HGW) networks. The concept of HGW has the potential of providing indoor coverage, which is always a challenge from the cellular operator point of view. An HGW also provides a radio interface similar to that of the cellular infrastructure, but it interfaces with the cellular network rather than with the public switched telephone network (PSTN). The coverage (cell range being in the range of 5 to 20 meters) of the HGW can be considered as a cell of the network, to which it is fully integrated.

However, the operator of the radio cellular network may not know the geographical location of the HGWs. Therefore, it is very difficult for the operator to define neighbouring cells relating to a cell defined by a HGW. This difficultly endangers the continuity of service from a cell defined by a HGW, for instance to an umbrella cell, i.e. a macro cell whose coverage includes the one of said cell.

An object of the invention is to improve the neighbouring cells management.

The invention proposes a method for discovering neighbouring cells as recited in the appended claims.

The invention has the advantage that the cell provisioning on the network side has been reduced. Moreover, the cell discovery is particularly simple since it is done mainly by the radio terminal. It is thus benefited from the capabilities of the radio terminal.

This also leads to significant cost reductions in the communication system thanks to simplifies engineering and provisioning. Especially the operational or running costs of the network are positively affected.

The invention also proposes a computer program product for implementing the method in accordance with embodiments of the invention, when the program is loaded and run on computer means of the network.

The invention also proposes a radio terminal and a controller as recited in the appended claims.

Other aspects of the invention are recited in the claims appended hereto.

Other features and advantages of the invention will become apparent from the following description of non-limiting exemplary embodiments, with reference to the appended drawings, in which:
- Figure 1 is a block diagram of a cellular wireless communication system illustrating an environment in which embodiments of the current invention may be applied;
- Figure 2 is a block diagram of customer equipment including a home gateway;
- Figure 3 is a diagram illustrating different phases of the configuration of a home gateway;
- Figure 4 is a flow chart illustrating a method according to an embodiment of the invention; and
- figure 5 is a flow chart illustrating a method according to another embodiment of the invention.

The invention will not be described in more detail in connection with a radio cellular network operating in accordance with a third generation (3g) universal mobile communication system (UMTS) standard. It is appreciated that the invention can also be applied to other networks, such as GSM or some future networks. Furthermore, the embodiments of the invention are described in the context of frequency division duplex (FDD) mode of the UMTS system as opposed to time division duplex (TDD) mode. However, the invention may equally be applied to networks operating in TDD mode.

The following description also relates to a situation in which the radio cellular network includes home gateway equipments. It should be noted however that the invention could also be applied to other types of networks as well. In particular, the invention applies to single layer networks and to multiple layer networks comprising a macro layer, a micro layer and/or a pico layer for instance.

### General network architecture

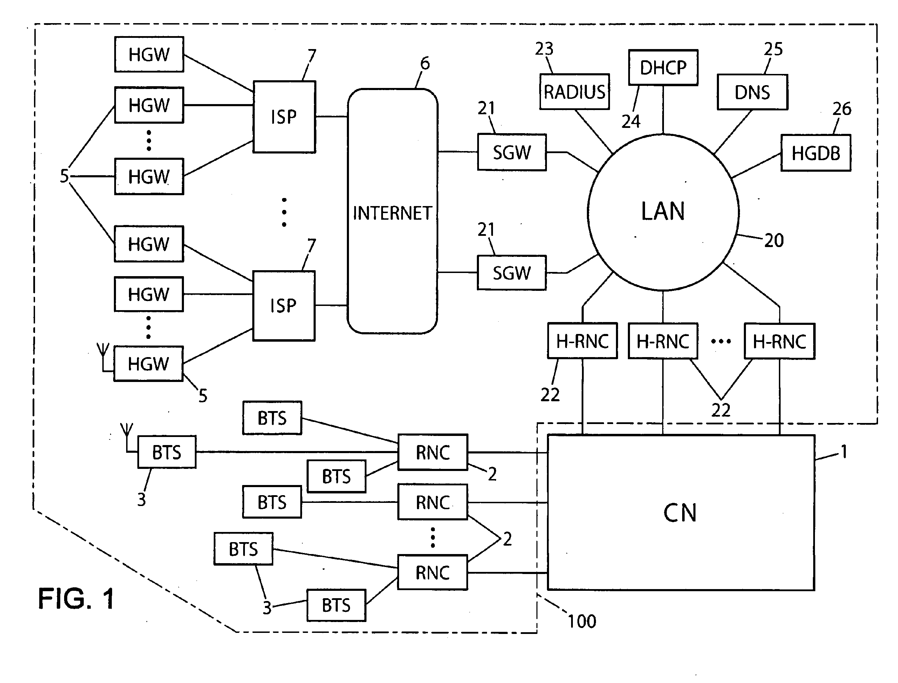

Referring to Figure 1, a conventional UMTS system includes a core network (CN) 1 comprising interconnected switches referred to as MSC/VLR (mobile switching center / visitor location register) for circuit-switched services and as SGSN (serving GPRS support node) for packet-switched services. In the UMTS terrestrial radio access network (UTRAN) architecture, a number of RNCs 2 are connected to the CN switches. Each RNC 2 supervises a number of BTSs 3, or nodes B, through an interface referred to as lub in the UMTS standards. The BTSs are distributed over the territory to be covered by the access network 100. Each BTS 3 serves one or several cells where the cellular service is made available to the public.

In Figure 1, HGWs 5 are added to the access network 100 to define cells of a different kind. A HGW 5 uses the same radio interface as a regular BTS 3. For convenience, the set of HGWs 5 can be allocated a specific carrier frequency distinct from that or those used by the BTSs 3 of the macro layer, so as to avoid complications in the radio engineering of the public part of the access network due to interference with HGWs 5. The radio range of a HGW 5 is low, typically a few tens of meters. It is intended to be installed in customer premises, so that it is an efficient means for the cellular operator to offer indoor coverage. Furthermore, the HGWs 5 may be under the radio coverage of an umbrella cell served by the BTS 3 of the public part of the cellular network.

A HGW 5 uses the customer's digital subscriber line (DSL), for example an asymmetric digital subscriber line (ADSL) for broadband access to internet protocol backbone network such as the Internet 6. The customer's DSL connects the HGW 5 to a router 7 of his/her Internet service provider (ISP).

A private operator network organised as a local area network (LAN) 20 is provided for the integration of the HGWs 5 to the cellular access network 100. The units of the private operator network 20 include:
- security gateways (SGW) 21 connected to the Internet 6 and capable of establishing secure tunnels with the HGWs 5 through the Internet 7;
- a plurality of RNCs 22, designated here as H-RNC, each connected to the core network 1;
- an authentication server 23, typically using the RADIUS protocol;
- a DHCP server 24 for providing the HGWs 5 with IP addresses in accordance with the standard dynamic host configuration protocol (DHCP);
- a domain name server (DNS) 25; and
- a home gateway management server 26, or home gateway database (HGDB).

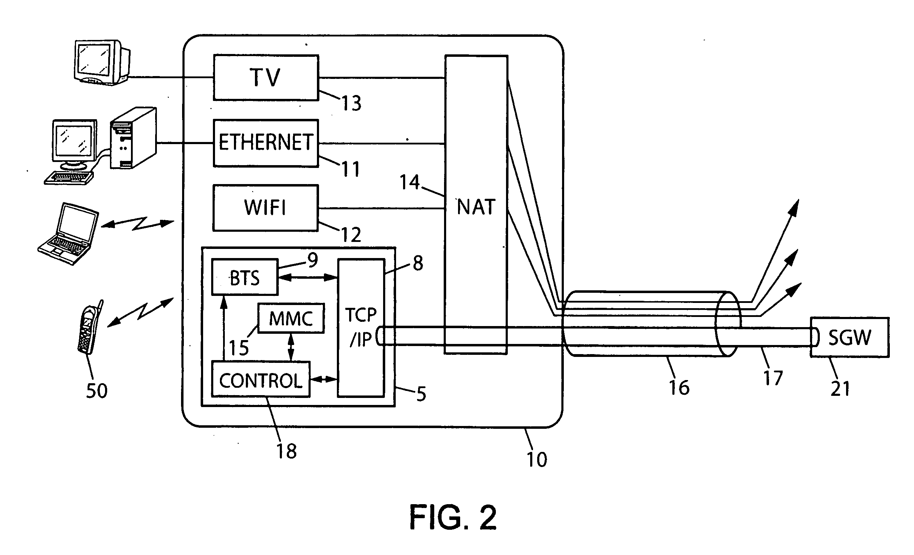

In an examplary solution (Figure 2), the HGW 5 belongs to a set top box 10, either as a built-in unit or as a peripheral unit, along with other modules such as an Ethernet board 11, a Wifi board 12, a TV decoder 13, etc. A network address translator (NAT) module 14 is provided within the set top box 10 for interfacing with the Internet via the subscriber's access line 16 and separating the public addressing domain from the private addressing domain of the customer.

The HGW 5 has a network (TCP/IP) interface 8 and a BTS unit 9 suitable for performing the node B functions of the UMTS standard. The HGW 5 is also fitted with a memory microcard (MMC) module 15 in which certain parameters are stored, including:
- a HGW identifier (ID) accessible for reading only, which may be coded in the same manner as the international mobile subscriber identity (IMSI);
- the IP address of a main SGW 21 to be contacted by the HGW 5. A backup SGW IP address may also be provided in case the main SGW 21 would not be available;
- the IP address of a main HGDB 26 to be contacted by the HGW 5. A backup HGDB IP address may also be provided in case the main HGDB 26 would not be available; and
- security credentials for the HGW 5, stored internally of the MMC without any possible access from the outside.

A control module 18 of the HGW 5 supervises the operation of the BTS unit 9 and exchanges information with the MMC module 15 and the private operator network 20.

Before the HGW 5 is delivered to the customer, some pre-configuration is needed to create the HGW ID and the associated security credentials, to record them into the RADIUS server 23, and to load the above-listed parameters into the MMC module 15. In addition, any customer-specific parameters needed for the operation of the HGW ID are defined and stored in the HGDB 26.

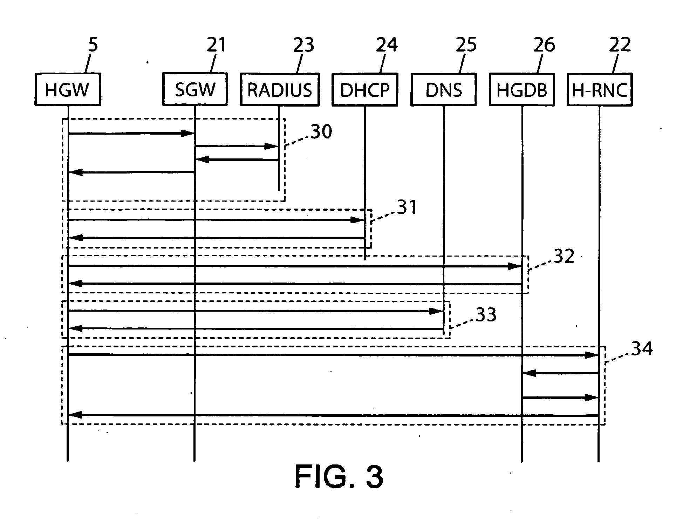

The HGW 5 is designed to be plug-and-play. When the customer plugs in and activates his HGW 5, its control module 18 automatically contacts the SGW 21 at the IP address written in the MMC module 15. This initiates the Internet access phase 30 indicated in Figure 3. In connection with the RADIUS server 23, the SGW 21 proceeds with the authentication of the HGW 5 and the establishment of an IPsec tunnel 17 with the HGW 5. This secure tunnel 17 will be used to encapsulate the UMTS lub interface between the BTS unit 9 of the HGW 5 and a H-RNC 22 over the Internet 6. The use of a secure tunnel prevents unauthorised HGWs from getting service from the CN 1 and avoids various potential security threats.

The next phase 31 of the configuration is the assignment of an IP address to the HGW 5 by means of a request sent by the control module 18 of the HGW 5 to the DHCP server 24. Then, in phase 32, the control module 18 of the HGW 5 contacts the HGDB 26 whose address is stored in the MMC module 15, and retrieves from this HGDB 26 all the customer-specific parameters including the domain name of a H-RNC 22 allocated to this HGW 5. In phase 33, the IP address of the H-RNC is resolved by an exchange between the control module 18 of the HGW and the DNS 25. The HGW 5 can then proceed with the attachment 34 of its BTS unit 9 with the allocated H-RNC 22.

In the attachment phase 34, the HGW 5 sends an attachment request to its H-RNC 22. The H-RNC 22 retrieves from the HGW 5 all the parameters provisioned for this HGW 5 and confirms the attachment to the HGW 5. The BTS unit 9 is then capable of supporting communications for one or more MSs (UE) 50 located within its range.

Optionally, certain post-configuration steps can be executed once the actual owner of the HGW 5 is known, in order to add information to the previously stored customer-specific parameters, such as the geographical coordinates of the installed HGW 5, for emergency services, or some mobility information usable in certain advantageous embodiments.

The dimensioning of an H-RNC 22 will generally be different from that of a RNC 2. A conventional RNC 2 is typically designed to manage from 1,000 to 2,000 BTSs 3 or cells each having a relatively high traffic capacity (e.g. about 4 Erlang). In contrast, an H-RNC 22 may have to manage up to 50,000 or 100,000 HGWs 5 of lower traffic capacity (e.g. about 0.1 Erlang).

### Single carrier dynamic cell discovery

In a first embodiment of the invention, the network operates on a single carrier, i.e. the cell to which the MS 50 of Figure 2 is currently connected operates on the same frequency as the cells to be discovered or detected. Let us denote this common frequency by F1 in the following description. This means that in a network comprising, for instance both cells covered by HGWs and macro cells, all operate on F1. In the following example the MS 50 performing the cell discovery is located in a cell defined by a HGW 5. In this case there is a high probability that at least some of the discovered neighbouring cells belong to the macro layer. It is to be noted that the cell discovery method equally applies to a situation where there is only one cell layer, for instance all cells could be macro cells.

In UMTS networks, the major part of the control signalling between the MSs 50 and a radio access network (RAN) is radio resource control (RRC) messages (3GPP TS 25.331 V7.0.0, 2006-03, release 7). RRC messages carry parameters required to set up, modify and release connections. The MSs 50 have two basic operational modes: idle mode and connected mode. The connected mode can be further divided into service states, which define what kind of physical channels the MSs 50 are using.

In idle mode, after the MS 50 is switched on, it selects (either automatically or manually) a public land mobile network (PLMN) to contact. The MS 50 looks for a suitable cell of the chosen PLMN, chooses that cell to provide available services, and tunes to its control channel. The choosing procedure is known as "camping on a cell". After camping on a cell, the MS 50 is able to receive system information and cell broadcast messages. The MS 50 stays in idle mode until it transmits a request to establish an RRC connection.

The service states in connected mode are generally referred as Cell_DCH, Cell_FACH, Cell_PCH and URA_PCH (3GPP TS 25.331). In the Cell_DCH state a dedicated physical channel is allocated to the MS 50, and the MS 50 is known by its serving RNC 2 or H-RNC 22 on a cell level or active set level. In the Cell_DCH state the MS 50 performs measurements and sends measurement reports according to measurement control information received from the RNC 2 or H-RNC 22.

In the Cell_FACH state no dedicated physical channel is allocated to the MS 50, but radio access channels (RACHs) and forward access channels (FACH) are used instead for transmitting both signalling messages and small amounts of user plane data. In this state, the MS 50 also performs cell reselections and after a reselection it sends a cell update message to the RNC 2 or H-RNC 22 so that the RNC 2 or H-RNC 22 knows the location of the MS 50 on a cell level.

In the Cell_PCH state the MS 50 is still known on a cell level in serving RNC 2 or H-RNC 22, but it can be reached only via a paging channel (PCH). If the MS 50 performs a cell reselection, it moves autonomously to the Cell_FACH state to execute the cell update procedure, after which the MS 50 re-enters the Cell_PCH state if no other activity is triggered during the cell update procedure.

The URA_PCH state is very similar to the Cell_PCH, except that the MS 50 does not execute cell update after each cell reselection, but instead reads universal terrestrial radio access network (UTRAN) registration area (URA) identities from the broadcast channel, and only if the URA changes (after cell reselection) does the MS 50 inform its location to the serving RNC 2 or H-RNC 22.

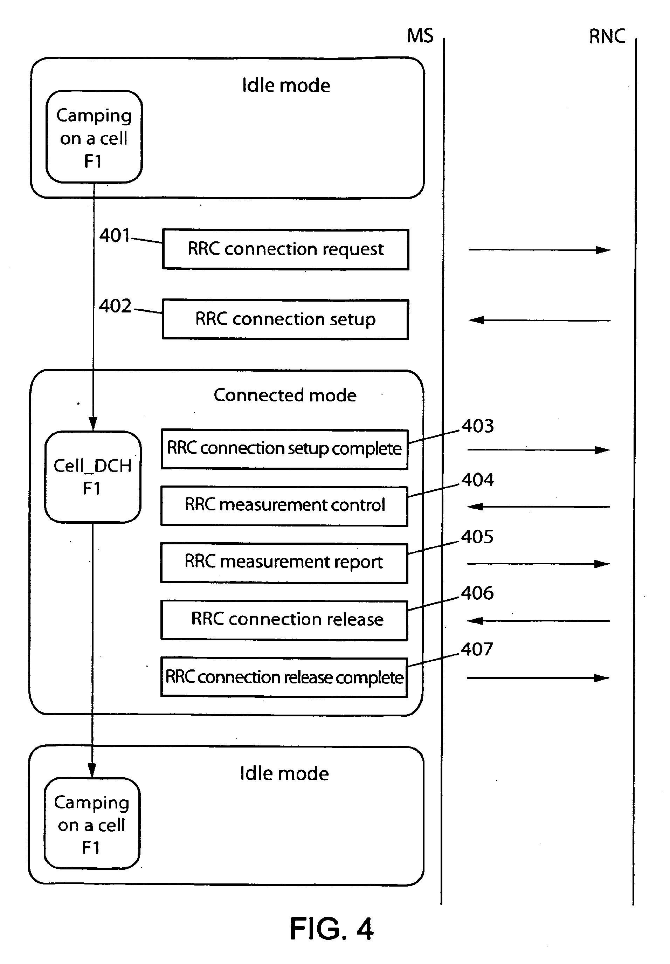

Referring now to Figure 4, in accordance with the first embodiment of the invention, the MS 50 performing a dynamic cell discovery has camped on a cell (in this case HGW 5) in idle mode. Then at step 401 the MS 50 sends an RRC connection request to the RAN, i.e. in this case to the H-RNC 22. The H-RNC 22 responds with an RRC connection setup message (step 402).

Then in connected mode in the Cell_DCH state the MS 50 sends to the H-RNC 22 an RRC connection setup complete message at step 403. Now an RRC connection between the MS 50 and the H-RNC 22 has been successfully set up on frequency F1. Next at step 404 the H-RNC 22 requires the MS 50 to perform intra-frequency cell detection or discovery by sending an RRC measurement control message comprising the following parameter types: measurement reporting criteria, measurement type and measurement objects. The measurement reporting criteria defines the triggering condition for triggering the measurements, such as periodical or event-triggered reporting. The measurement type defines the type of measurement the MS 50 should carry out and is chosen from a prefedined list of seven types, wherein each type describes what the MS 50 measures. The measurement objects define the objects the MS 50 shall measure and corresponding object information. Examples of different measurement objects are, for instance cells and carriers.

As an example the corresponding values of these parameters can be event-triggered reporting mode, intra-frequency measurements on frequency F1 and detected cells, respectively. Furthermore, the measurement reporting criteria may comprise further details on how the cells can be detected. In this case the H-RNC 22 can instruct the MS 50 to use, for instance a common pilot channel (CPICH) for detecting cells. The cells can be detected when a certain threshold is exceeded, such a threshold could be, for instance received signal strength, signal-to-noise ratio, bit error rate or frame error rate.

When the MS 50 has done the required measurements, it creates a neighbouring cell list containing cell identities of the detected cells. This list has a size less than a number fixed by the system. Only cells demonstrating sufficiently good received signal quality or level on frequency F1 are accepted onto the list. However, there may be also other criteria for entering the list. Next at step 405 the MS 50 replies to the H-RNC 22 by sending an RRC measurement report containing an indication of at least some of the identities of the detected cells.

The connection to the H-RNC 22 can now be released. At step 406, the H-RNC 22 sends an RRC connection release message to the MS 50 and at step 407 the MS 50 responds to this by sending an RRC connection release complete message. After this the MS 50 returns to idle mode and may camp on an HGW 5 again.

In the embodiment described above the Cell_DCH state was used in connected mode.

### Multi-carrier dynamic cell discovery

In a second embodiment of the invention, the network operates at least on two different carrier frequencies, for instance an inferior layer covered by HGWs 5 operates on a different frequency as the cells of a macro layer. In this case, the the macro layer comprises umbrella cells for the cells covered by HGWs 5. Let us denote a frequency used by the inferior layer by F1, whereas the macro cells are operating on a frequency F2. It is assumed that the MS 50 is initially camping on a cell covered by an HGW 5 on frequency F1.

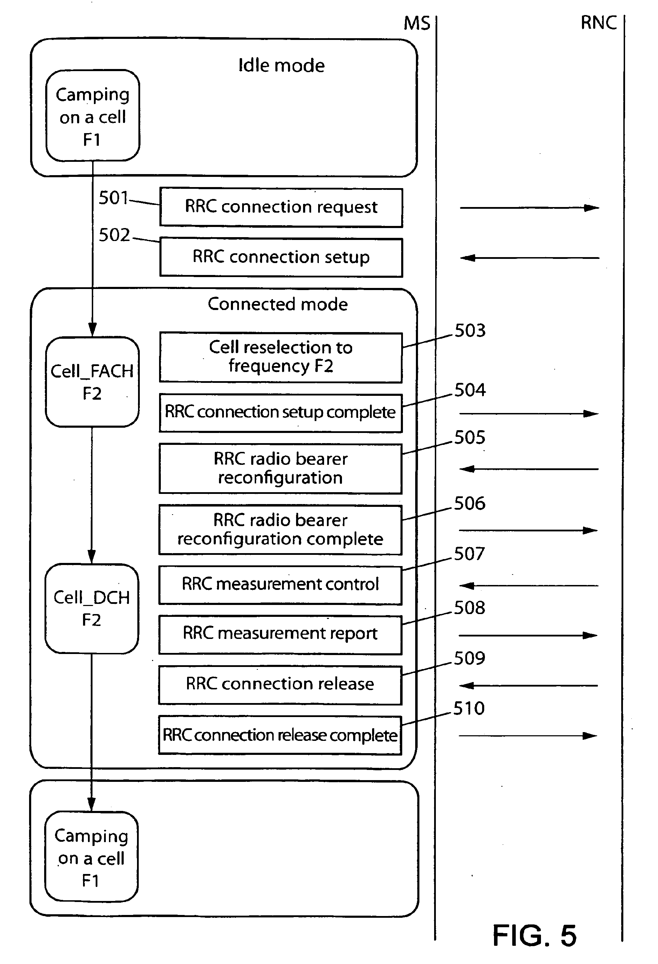

Beginning of the dynamic cell discovery procedure in accordance with the second embodiment of the invention is similar to the procedure in the first embodiment of the invention. Referring now to Figure 5, in accordance with the second embodiment of the invention, the MS 50 performing a dynamic cell discovery has camped on a cell in idle mode. Then at step 501 the MS 50 sends an RRC connection request to the RAN, i.e. in this case to the H-RNC 22. The RAN responds with an RRC connection setup message at step 502. But now the RRC connection setup message instructs the MS 50 to redirect to frequency F2 and to use Cell_FACH state in connected mode.

At step 503 the MS 50 chooses the best cell on frequency F2 (i.e. the macro cell), for instance using the same criteria as before in the first embodiment of the invention when detecting cells. Now at step 504 the MS 50 can send an RRC connection setup complete message to the H-RNC 22. Next at steps 505 and 506 the MS 50 prepares for transition from Cell_FACH state to Cell_DCH state (RRC radio bearer reconfiguration procedure).

The rest of the cell discovery follows the same principles as in the first embodiment of the invention except that now the MS 50 operates on the frequency F2.

At step 507 the H-RNC 22 requires the MS 50 to perform intra-frequency cells detection by sending an RRC measurement control message comprising the following parameter types: measurement reporting criteria, measurement type and measurement objects. In this case the corresponding values of these parameters are event-triggered reporting mode, inter-frequency measurements and detected cells, respectively. Furthermore, the measurement reporting criteria may comprise further details how the cells can be detected. In this case the H-RNC 22 can instruct the MS 50 to use, for instance a common pilot channel (CPICH) for detecting cells. The cells can be detected when a certain threshold is exceeded, such a threshold could be, for instance received signal strength, signal-to-noise ratio, bit error rate or frame error rate.

When the MS 50 has done the required measurements, it creates a neighbouring cell list. This list which was discovered on the frequncy F2 includes only macro cells in this embodiment. Only cells demonstrating sufficiently good received signal quality or level on the frequency F2 may be accepted onto the list. Next at step 508 the MS 50 replies to the H-RNC 22 by sending an RRC measurement report containing at least some of the identities of the detected cells.

The connection to the H-RNC 22 can now be released at steps 509 and 510 by an RRC connection release procedure between the H-RNC 22 and the MS 50. After this the MS 50 returns to idle mode and may camp on an HGW 5 again.

Once the neighbouring list has been determined, it can be used as usual, for instance for performing neighbouring cell measurements in order to to re-select a neighbouring cell in idle mode or to perform a handover to a neighbouring cell in connected mode, if necessary. It should be noted that the same neighbouring cell list or different lists can be discovered for idle mode and connected mode.

The invention was described above in the particular case of a UMTS home gateway network for the sake of illustration. In HGW environment the invention promotes plug and play approach of HGWs, since setting up new HGWs does not require heavy involvement of network elements in cell discovery. However, it is appreciated that the invention is also applicable to various other cellular networks as well. For instance the invention allows for an MS 50 located in a pico cell to discover other pico cells or macro cells. The invention equally allows for an MS 50 located in a macro cell to discover pico cells.

The invention equally relates to the corresponding mobile terminal that is capable of carrying out the method in accordance with various embodiments of the invention. The mobile terminal should be capable of performing measurements as described in "3GPP TS 25.215 and 25.331".

The invention also relates to a controller that may be, for instance a radio network controller of a UMTS system. The RNC is capable of communicating with mobile stations through base stations in accordance with the embodiments of the invention.

Furthermore, the invention relates to a system comprising at least the controller and the mobile terminal arranged to operate in accordance with the embodiments of the invention.

## Claims

1. A method for discovering neighbouring cells in a radio cellular network comprising cells each controlled by a controller (2, 22), the method being **characterised in that** it comprises the following steps with respect to a radio terminal (50) located in a cell and arranged for performing radio measurements, wherein at least some of the neighbouring cells of said cell are not known to the controller:
- setting up (401-403, 501-504) a connection between the radio terminal (50) and the controller (2, 22) controlling said cell;
- receiving (404, 507) a control message from the controller (2, 22), said control message ordering the radio terminal (50) to perform radio measurements relating to neighbouring cells of said cell in order to discover at least some of the unknown neighbouring cells;
- responsive to the reception of the control message, performing said radio measurements relating to neighbouring cells of said cell; and
- transmitting (405, 508) a radio measurements report to the controller (2, 22), said report containing an indication of identity of at least some of the discovered neighbouring cells of said cell.

2. The method according to claim 1, wherein said control message is a radio resource control (RRC) measurement control message comprising at least one of the following parameter types: measurements reporting criterion, measurement type and measurement objects.

3. The method according to any of the preceding claims, wherein said network comprises at least a first cell layer operating on a first frequency and a second cell layer operating on a second frequency, said method further comprising said radio terminal (5b) operating on the first frequency receiving from said controller (2, 22) an indication to perform a cell reselection (503) to the second frequency before performing said radio measurements.

4. The method according to any of the preceding claims, wherein the radio terminal (50) initially operates in idle mode and turns to connected mode in the course of said setting up (401-403, 501-504) of a connection.

5. The method according to claim 4, wherein during said performing of said radio measurements, the radio terminal (50) operates in Cell_DCH state.

6. The method according to claim 5, wherein said setting up (401-403, 501-504) of a connection is done in Cell_FACH state and wherein a radio bearer reconfiguration (505, 506) is made for transition from Cell_FACH state to Cell_DCH state.

7. The method according to any of the preceding claims, wherein the cell in which said radio terminal (50) is currently located provides indoor coverage.

8. The method according to claim 7, wherein said indoor coverage is substantially between 5 and 20 meters.

9. The method according to any of the preceding claim, wherein the cell where said radio terminal (50) is located operates on a first frequency and the neighbouring cells operate on a second frequency, the second frequency being different from the first frequency.

10. The method according to claims 1-2 or 4-8, wherein the cell where said radio terminal (50) is located operates on the same frequency as the neighbouring cells.

11. The method according to any of the preceding claims, wherein the cell where said radio terminal (50) is located is connected to said controller (2, 22) via an internet protocol backbone network.

12. A computer program product for implementing the method according to any of the claims 1-11, when loaded and run on computer means of the network.

13. A radio terminal (50) capable of performing a neighbouring cell discovery in a radio cellular network comprising cells each controlled by a controller (2, 22), the radio terminal (50) being **characterised in that** it comprises when located in a cell, at least some of the neighbouring cells of which are not known to the controller:
- means for setting up a connection with the controller (2, 22) controlling said cell;
- means for receiving a control message from the controller (2, 22), said control message ordering the radio terminal (50) to perform radio measurements relating to neighbouring cells of said cell in order to discover at least some of the unknown neighbouring cells;
- means for responsive to the reception of the control message, performing said radio measurements relating to neighbouring cells of said cell; and
- means for transmitting a radio measurements report to the controller (2, 22), said report containing an indication of the identity of at least some of the discovered neighbouring cells of said cell.

14. A controller (2, 22) capable of managing neighbouring cell discovery in a radio cellular network comprising cells each controlled by a controller (2, 22), the controller (2, 22) being **characterised in that** it comprises with respect to a radio terminal (50) located in a cell for which at least some of the neighbouring cells are not known to the controller and arranged for performing radio measurements:
- means for setting up a connection with said radio terminal (50);
- means for sending a control message to the radio terminal (50), said control message ordering the radio terminal (50) to perform radio measurements relating to neighbouring cells of said cell in order to discover at least some of the unknown neighbouring cells; and
- means for receiving from the radio terminal (50) a radio measurements report containing an indication of the identity of at least some of the discovered neighbouring cells of said cell.

## Patentansprüche

1. Verfahren zur Entdeckung von benachbarten Zellen in einem zellularen Funknetzwerk, welches Zellen umfasst, die jeweils von einem Controller (2; 22) gesteuert werden, wobei das Verfahren **dadurch gekennzeichnet ist, dass** es die folgenden Schritte in Bezug auf ein Funkendgerät (50), welches sich in einer Zelle befindet und für das Durchführen von Funkmessungen ausgelegt ist, wobei zumindest einige der mit der besagten Zelle benachbarten Zellen dem Controller unbekannt sind, umfasst:
- Aufbauen (401-403, 501-504) einer Verbindung zwischen dem Funkendgerät (50) und dem Controller (2, 22), welcher die besagte Zelle steuert;
- Empfangen (404, 507) einer Steuernachricht von dem Controller (2; 22.), wobei die besagte Steuernachricht dem Funkendgerät (50) befiehlt, Funkmessungen in Bezug auf mit der besagten Zelle benachbarte Zellen durchzuführen, um zumindest einige der unbekannten benachbarten Zellen zu entdecken;
- in Reaktion auf den Empfang der Steuernachricht, Durchführen der besagten Funkmessungen in Bezug auf mit der besagten Zelle benachbarte Zellen; und
- Übertragen (405, 508) eines Funkmessberichts an den Controller (2, 22), wobei der besagte Bericht eine Angabe über die Identität zumindest einiger der entdeckten mit der besagten Zelle benachbarten Zellen beinhaltet.

2. Verfahren nach Anspruch 1, wobei die besagte Steuernachricht eine Messsteuerungsnachricht für die Funkressourcensteuerung (RRC) ist, welche mindestens einen der folgenden Parametertypen enthält: Kriterium für die Messwertmitteilung, Art der Messung und Messobjekte.

3. Verfahren nach einem beliebigen der vorstehenden Ansprüche, wobei das besagte Netzwerk mindestens eine erste Zellenschicht, welche auf einer ersten Frequenz betrieben wird, und eine zweite Zellenschicht, welcher auf einer zweiten Frequenz betrieben wird, umfasst, wobei das besagte Verfahren weiterhin das Empfangen, an dem besagten Funkendgerät (50), welches auf der ersten Frequenz betrieben wird, einer Angabe zum Durchführen Zellenwiederauswahl (503) zu der zweiten Frequenz vor der Durchführung der besagten Funkmessungen von dem besagten Controller (2, 22) umfasst.

4. Verfahren nach einem beliebigen der vorstehenden Ansprüche, wobei das Funkendgerät (50) ursprünglich im Ruhezustand betrieben wird und während des besagten Aufbaus (401-403, 501-504) einer Verbindung in den Zustand mit aktiver Verbindung schaltet.

5. Verfahren nach Anspruch 4, wobei das Funkendgerät (50) während des besagten Durchführens der besagten Funkmessungen im Cell_DCH-Zustand betrieben wird.

6. Verfahren nach Anspruch 5, wobei der Aufbau (401-403, 501-504) einer Verbindung im Cell_FACH-Zustand erfolgt, und wobei eine Funkträger-Rekonfiguration (505, 506) für den Übergang vom Cell_FACH-Zustand in den Cell_DCH-Zustand durchgeführt wird.

7. Verfahren nach einem beliebigen der vorstehenden Ansprüche, wobei die Zelle, in welcher sich das besagte Funkendgerät (50) momentan aufhält, die Abdeckung im Innenbereich bereitstellt.

8. Verfahren nach Anspruch 7, wobei die besagte Abdeckung im Innenbereich im Wesentlichen zwischen 5 und 20 Meter beträgt.

9. Verfahren nach einem beliebigen der vorstehenden Ansprüche, wobei die Zelle, in welcher sich das besagte Funkendgerät (50) aufhält, auf einer ersten Frequenz betrieben wird und die benachbarten Zellen auf einer zweiten Frequenz betrieben werden, wobei sich die zweite Frequenz von der ersten Frequenz unterscheidet.

10. Verfahren nach den Ansprüchen 1-2 oder 4-8, wobei die Zelle, in welcher sich das besagte Funkendgerät (50) befindet, auf derselben Frequenz wie die benachbarten Zellen betrieben wird.

11. Verfahren nach einem beliebigen der vorstehenden Ansprüche, wobei die Zelle, in welcher sich das besagte Funkendgerät (50) befindet, über ein Internetprotokoll-Backbone-Netzwerk mit dem besagten Controller (2, 22) verbunden ist.

12. Computerprogramm-Produkt zum Implementieren des Verfahrens nach einem beliebigen der Ansprüche 1-11, wenn es geladen ist und auf Computermitteln des Netzwerks läuft.

13. Funkendgerät (50), ausgelegt für die Entdeckung von benachbarten Zellen in einem zellularen Funknetzwerk, welches Zellen umfasst, die jeweils von einem Controller (2; 22) gesteuert werden, wobei das Funkendgerät (50) **dadurch gekennzeichnet ist, dass** es, wenn es sich in einer Zelle aufhält, deren benachbarte Zellen mindestens zum Teil dem Controller unbekannt sind, umfasst:
- Mittel für den Aufbau (401-403, 501-504) einer Verbindung zu dem Controller (2, 22), welcher die besagte Zelle steuert;
- Mittel für den Empfang (404, 507) einer Steuernachricht von dem Controller (2; 22.), wobei die besagte Steuernachricht dem Funkendgerät (50) befiehlt, Funkmessungen in Bezug auf mit der besagten Zelle benachbarte Zellen durchzuführen, um zumindest einige der unbekannten benachbarten Zellen zu entdecken;
- Mittel für die Durchführung, in Reaktion auf den Empfang der Steuernachricht, der besagten Funkmessungen in Bezug auf mit der besagten Zelle benachbarte Zellen; und
- Mittel für die Übertragung eines Funkmessberichts an den Controller (2, 22), wobei der besagte Bericht eine Angabe über die Identität zumindest einiger der entdeckten mit der besagten Zelle benachbarten Zellen beinhaltet.

14. Controller (2, 22), ausgelegt für die Verwaltung der Entdeckung von benachbarten Zellen in einem zellularen Funknetzwerk, welches Zellen umfasst, die von einem Controller (2; 22) gesteuert werden, wobei der Controller (2, 22) **dadurch gekennzeichnet ist, dass** er in Bezug auf ein Funkendgerät (50), welches sich in einer Zelle aufhält, deren benachbarte Zellen mindestens zum Teil dem Controller unbekannt sind, und für das Durchführen von Funkmessungen umfasst:
- Mittel für den Aufbau einer Verbindung zu dem besagten Funkendgerät (50);
- Mittel zum Senden einer Steuernachricht an das besagte Funkendgerät (50), wobei die besagte Steuernachricht dem Funkendgerät (50) befiehlt, Funkmessungen in Bezug auf mit der besagten Zelle benachbarte Zellen durchzuführen, um zumindest einige der unbekannten benachbarten Zellen zu entdecken;
- Mittel für den Empfang, von dem Funkendgerät (50), eines Funkmessberichtes, welcher eine Angabe über die Identität zumindest einiger der entdeckten mit der besagten Zelle benachbarten Zellen beinhaltet.

## Revendications

1. Procédé de découverte de cellules voisines dans un réseau radiocellulaire comprenant des cellules contrôlées chacune par un contrôleur (2, 22), le procédé étant **caractérisé en ce qu'**il comprend les étapes suivantes en relation avec un terminal radio (50) situé dans une cellule et agencé pour effectuer des mesures radio, dans lequel au moins certaines des cellules voisines de ladite cellule ne sont pas connues du contrôleur :
- établissement (401-403,501-504) d'une connexion entre le terminal radio (50) et le contrôleur (2, 22) qui contrôle ladite cellule ;
- réception (404, 507) d'un message de commande depuis le contrôleur (2, 22), ledit message de commande demandant au terminal radio (50) d'effectuer des mesures radio relatives aux cellules voisines de ladite cellule afin de découvrir au moins certaines des cellules voisines inconnues ;
- en réponse à la réception du message de commande, réalisation : desdites mesures radio relatives aux cellules voisines de ladite cellule ; et
- transmission (405, 508) d'un rapport de mesures radio au contrôleur (2,22), ledit rapport contenant une indication de l'identité d'au moins certaines des cellules découvertes voisines de ladite cellule.

2. Procédé selon la revendication 1, dans lequel ledit message de commande est un message de commande de mesure RRC (de commande de ressource radio), comprenant au moins l'un des types de paramètres suivants : critère de rapport de mesure, type de mesure et objets de mesure.

3. Procédé selon l'une quelconque des revendications précédentes, dans lequel ledit réseau comprend au moins une première couche cellulaire fonctionnant sur une première fréquence et une seconde couche cellulaire fonctionnant sur une seconde fréquence, ledit procédé comprenant en outre la réception par ledit terminal radio (50) fonctionnant sur la première fréquence, depuis ledit contrôleur (2, 22) d'une indication de réaliser une nouvelle sélection de cellule (503) sur la seconde fréquence avant d'effectuer lesdites mesures radio.

4. Procédé selon l'une quelconque des revendications précédentes, dans lequel le terminal radio (50) fonctionne initialement en mode inactif et passe en mode connecté au cours dudit établissement (401-403, 501-504) d'une connexion.

5. Procédé selon la revendication 4, dans lequel, pendant la réalisation desdites mesures radio, le terminal radio (50) fonctionne dans l'état Cell_DCH.

6. Procédé selon la revendication 5, dans lequel ledit établissement (401-403, 501-504) d'une connexion est réalisé dans l'état Cell_FACH et dans lequel une reconfiguration de porteuse radio (505, 506) est réalisée pour la transition de l'état Cell_FACH à l'état Cell_DCH.

7. Procédé selon l'une quelconque des revendications précédentes, dans lequel la cellule dans laquelle ledit terminal radio (50) est présentement situé fournit une couverture intérieure.

8. Procédé selon la revendication 7, dans lequel ladite couverture intérieure est sensiblement comprise entre 5 mètres et 20 mètres.

9. Procédé selon l'une quelconque des revendications précédentes, dans lequel la cellule dans laquelle se trouve ledit terminal radio (50) fonctionne sur une première fréquence et les cellules voisines fonctionnent sur une seconde fréquence, la seconde fréquence étant différente de la première fréquence.

10. Procédé selon les revendications 1 et 2 ou 4 à 8, dans lequel la cellule dans laquelle se trouve ledit terminal radio (50) fonctionne sur la même fréquence que les cellules voisines.

11. Procédé selon l'une quelconque des revendications précédentes, dans lequel la cellule dans laquelle se trouve ledit terminal radio (50) est connectée audit contrôleur (2, 22) via un réseau de base avec protocole internet.

12. Produit de programme informatique pour mettre en oeuvre le procédé selon l'une quelconque des revendications 1 à 11, lorsqu'il est chargé et exécuté sur des moyens informatiques du réseau.

13. Terminal radio (50) capable de réaliser une découverte de cellules voisines dans un réseau radiocellulaire comprenant des cellules contrôlées chacune par un contrôleur (2, 22), le terminal radio (50) étant **caractérisé en ce qu'**il comprend, lorsqu'il est situé dans une cellule, au moins certaines des cellules voisines qui ne sont pas connues du contrôleur :
- des moyens pour établir une connexion avec le contrôleur (2, 22) qui contrôle ladite cellule ;
- des moyens pour recevoir un message de commande depuis le contrôleur (2, 22), ledit message de commande demandant au terminal radio (50) d'effectuer des mesures radio relatives aux cellules voisines de ladite cellule afin de découvrir au moins certaines des cellules voisines inconnues ;
- des moyens pour, en réponse à la réception du message de commande, réaliser : lesdites mesures radio relatives aux cellules voisines de ladite cellule ; et
- des moyens pour transmettre un rapport de mesures radio au contrôleur (2, 22), ledit rapport contenant une indication de l'identité d'au moins certaines des cellules découvertes voisines de ladite cellule.

14. Contrôleur (2, 22) capable de gérer la découverte de cellules voisines dans un réseau radiocellulaire comprenant des cellules contrôlées chacune par un contrôleur (2, 22), le contrôleur (2, 22) étant **caractérisé en ce qu'**il comprend, en relation avec un terminal radio (50) situé dans une cellule pour laquelle au moins certaines des cellules voisines ne sont pas connues du contrôleur et agencé pour effectuer des mesures radio :
- des moyens pour établir une connexion avec ledit terminal radio (50) ;
- des moyens pour envoyer un message de commande au terminal radio (50), ledit message de commande demandant au terminal radio (50) d'effectuer des mesures radio relatives aux cellules voisines de ladite cellule afin de découvrir au moins certaines des cellules voisines inconnues ; et
- des moyens pour recevoir depuis le terminal radio (50) un rapport de mesures radio contenant une indication de l'identité d'au moins certaines des cellules découvertes voisines de ladite cellule.
